# EUROPEAN PATENT SPECIFICATION

(11) **EP 4 526 364 B1**
(45) Date of publication and mention of the grant of the patent: **18.03.2026**
(21) Application number: 23731665.8
(22) Date of filing: 08.06.2023
(51) Int. Cl.: C08G 18/80, D06M 15/00

(54) **FLUORINE-FREE DURABLE WATER REPELLENT COMPOSITIONS**
FLUORFREIE DAUERHAFTE WASSERABWEISENDE ZUSAMMENSETZUNGEN
COMPOSITIONS HYDROFUGES DURABLES SANS FLUOR

(30) Priority: 13.06.2022 EP 22178727
(43) Date of publication of application: 26.03.2025
(73) Proprietor: Swiss Performance Chemicals AG, 4132 Muttenz (CH)
(72) Inventor: RUSHFORT, Mike, 4132 Muttenz (CH); FOESSEL, Matthias, 4132 Muttenz (CH); MHEIDLE, Mickael, 68390 Sausheim (FR)
(74) Representative: E. Blum & Co. AG
(86) International application number: PCT/EP2023/065382
(87) International publication number: WO 2023/242054

(56) References cited:
- EP-A1- 3 702 522

## Description

### Summary

The present invention relates to novel treatments of fibrous substrates for obtaining a durable water repellent effect. The methods described herein prove to be environmentally friendly and allow the use of renewable starting materials. Specifically, impregnating dispersions, concentrate dispersions, corresponding kit of parts are disclosed. The invention further provides for novel methods to prepare concentrate dispersions, impregnating dispersions and treatment of fabrics. The fabrics treated with the inventive impregnating dispersions show unexpected beneficial properties, when compared to known treatments. These beneficial properties include improved water repellency, even after multiple washing cycles and for a wide variety of fabrics. The thus obtained fabrics are applicable in a wide variety of applications, including outdoor clothing, outdoor equipment and protective clothing.

### Background

The application of durable water repellent (DWR) treatments to fabrics is a process widely used in the textile industry for the production of high performance outdoor clothing, outdoor equipment and protective clothing. Broadly speaking they can be divided in fluorocarbon (FC) DWR systems and non-fluorine DWR systems. Application processes most widely used are padding and coating processes.

**Fluorocarbon (FC) DWR systems:** Until recently, fluorocarbon (FC) systems were commonly used because they were highly effective on a wide range of fabrics. Such FC-DWR systems consist of emulsions or dispersions of the FC-polymer in water and typically have an active solids content of approximately 30% w/w. FC systems are typically applied either by a padding or a coating process as outlined below in more detail. However, it has been recognized that low molecular weight impurities associated with the fluoropolymer have serious health implications. Consequently, many major commercial brands have stopped using fluorocarbon-based products and there has been an increased demand on alternatives.

In the padding process, the open width fabric is saturated with a dilute solution of the FC polymer and is then passed through a mangle, which consists of two synthetic rubber rollers with hydraulic pressure applied to one of the rollers, usually the upper roller, so that excess liquor is squeezed from the fabric. The squeeze pressure is usually adjusted so that the fabric retains between 60- and 100-grams liquor per 100g fabric. This is referred to as the "pick-up" and is important in calculating the amount of product applied to the fabric, or the "treatment level". The fabric is passed through a stenter frame, where it is held at open width between parallel chains as it passes through a series of drying zones so that the water is removed and the surfaces of the individual yarns, filaments or fibers in the fabric become coated with a very thin film of the hydrophobic fluorocarbon polymer.

An alternative method of applying fluorocarbon polymers to fabrics is to use a coating process, in which a continuous film of the fluorocarbon polymer is formed on the surface of the fabric. A thickening agent is added to the fluorocarbon polymer to increase its viscosity and form a paste. There are many different types of coating process, but knife coating systems are most commonly used in which the paste is applied as a thin layer to one surface of the fabric. The coated fabric is then passed through a stenter frame to dry the film on the surface of the fabric.

Additionally, a cross-linking agent may be added to the fluorocarbon polymer to increase the system's performance and durability. The cross-linking agent is usually based on blocked isocyanate chemistry, where a polyfunctional isocyanate has been reacted with a blocking agent to produce a product which is inert at room temperature but the isocyanate functionality can be re-activated by heat. Products of this type are commonly referred to as "extenders". The temperature of zones in the stenter frame can be increased to cause this activation and subsequent cross-linking reactions to occur both within the polymer and between the polymer and fiber surface.

**Non-fluorine DWR systems:** Currently, non-fluorine DWR (NF-DWR) systems which can be applied to textiles are being developed. An important requirement of a NF-DWR treatment is that it can be applied using exactly the same textile processing machinery and procedures used for applying the fluorine-based DWR systems. This will simplify the introduction of the new technology into the industry at minimum cost and this present invention meets these requirements.

Traditionally, water repellent effects were produced on textile products by the application of waxes, either by melting the wax onto the fabric using a coating technique or from an aqueous dispersion. However, unlike the FC-DWR systems, the traditional wax-based systems were not very durable. More recently methods of increasing the durability of wax-based systems have been investigated in the development of NF-DWR systems.

The wax dispersion used in these traditional DWR systems might have been a synthetic wax, such as a paraffin wax, or a natural wax. In the development of an NF-DWR system, a natural wax would be preferred because it increases the biocarbon content and hence the degree of sustainability of the treatment. Beeswax and Carnauba wax are examples of natural waxes which are used in industrial applications to produce water repellent effects on hard surfaces, for example floor and car polishes. Although it is well known that paraffin waxes can be used to produce water repellent effects on textiles, natural waxes are not commonly used because, in the ways they have been applied previously, they give low levels of performance and lack durability. For example, Sworen et al (WO2015/191326) disclose aqueous dispersions for treating fibrous substrates, comprising a wax and a polymer extender. As suitable wax, beeswax is proposed. As suitable extender, specific polyurethane polymers are disclosed which are fully reacted. Although suitable, the results obtained, and specified in table 4 of that document, are considered insufficient for many applications. The document suggests padding processes for application of the aqueous dispersion. It should be noted at this point that the polyurethane extender referred to by Sworen is totally different in chemical structure and behaviour to the blocked isocyanate systems according to this invention. The isocyanate functionality is not restored by heating the polyurethane.

EP3702522 discloses a resorcinol and formaldehyde free aqueous dipping composition for coating a textile reinforcing material comprising rubber latex, blocked isocyanate and at least one hydrocarbon wax.

Accordingly, there is a need for providing improved DWR systems. Particularly, such systems should aim for the performance of FC-DWR systems but avoid health implications and / or environmental implications. Additionally, it would be beneficial if such systems can be used with machinery already available, thereby facilitating a switch to such new systems.

One or more of the above objectives are achieved by the impregnating dispersions described in claim 1. Further aspects of the invention are disclosed in the specification and independent claims, preferred embodiments are disclosed in the specification and the dependent claims. The invention thus provides:
- in a first aspect impregnating dispersions suitable to obtain a durable water repellent effect on fabrics and fibrous substrates;
- in a second aspect a concentrate dispersion and a kit of parts to prepare the above impregnating dispersions;
- in a third aspect textile products having a durable water repellent properties;
- in a fourth aspect methods for manufacturing impregnating dispersions, concentrate dispersions, and kit of parts;
- in a fifth aspect methods for manufacturing textile products having a durable water repellent effect.

As used herein, the terms "a", "an,", "the" and similar terms used in the context of the present invention (especially in the context of the claims) are to be construed to cover both the singular and plural unless otherwise indicated herein or clearly contradicted by the context.

### Detailed description of the invention

In a **first aspect,** the present invention relates to impregnating dispersions comprising Candelilla wax and blocked isocyanates as further specified below. These impregnating dispersions are suitable to obtain a durable water repellent effect on fibrous substrates, they prove to be environmental friendly, compatible with existing equipment and safe to the user. In industry, such impregnating dispersions are also referred to as "treatment liquors", as they may be directly applied to a suitable substrate. This aspect of the invention shall be explained in further detail below.

Advantageously, the impregnating dispersion comprises a continuous phase and a dispersed phase, wherein the continuous phase is an aqueous system and the dispersed phase comprises a wax and a blocked isocyanate, characterized in that the wax is candelilla wax; and the blocked isocyanate is selected from the group consisting of blocked-isocyanates having a molecular weight of below 2000 g/mol. The amount of water in the impregnating dispersion may vary over a broad range, but typically is in the range of 886 - 993 mL/L. Such impregnating dispersions are used in industry, for example in padding processes or coating processes. Such dispersions are often described as "finishing bath" and may contains further components, such as those described below. It was surprisingly found that high levels of water repellency can be achieved using Candelilla wax dispersions, if they are applied to fabrics in combination with a specific blocked isocyanate as disclosed herein. This result was not expected because the Candelilla wax produces only a low level of repellency if applied without the blocked isocyanate and the blocked isocyanate alone produces no repellent effect in the absence of the wax. A truly synergistic effect was observed. It comes as a further surprise that other natural waxes, such as Carnauba wax do not show these pronounced effects.

**Candelilla Wax:** Candelilla wax is a known component identified by CAS 8006-44-8 and E902. It includes the natural product, extracted from plants of the Genus Euphorbia (E.g. Euphorbia antisyphilitica and Euphorbia bracteata) and its synthetic equivalent, known e.g. as Kahlwax 6605.

Crude Candelilla wax is obtained by first boiling the dried stalks of a suitable candelilla containing plant in water acidified with sulfuric acid to release the wax. The molten wax is then skimmed off and allowed to solidify and refined by further treatment with sulfuric acid and subsequent passage through filter-presses.

Candelilla wax consists primarily of odd-numbered n-alkanes (C29 to C33), together with esters of acids and alcohols with even-numbered carbon chains (C28 to C34). Free acids, free alcohols, sterols, neutral resins, and mineral matter are also present. Accordingly, suitable candelilla wax may have a purity as determined by one or more of the following parameters: melting range 68.5 - 72.5 °C, acid value 12 - 22 and saponification value 43 - 65.

**Blocked isocyanate:** Blocked isocyanates are well known in the field and are commercial items. In this invention, suitable blocked isocyanates are based on isocyanate chemistry, where a poly-functional isocyanate has been reacted with a blocking agent described below to produce a product which is inert at room temperature with no isocyanate functionality. The functionality can be restored by heating the blocked isocyanate above its activation temperature, when the blocking action is reversed and the isocyanate group becomes available to react with suitable functional groups. During the fabric treatment process, the surface temperature of the fabric can be increased to cause this activation and the subsequent cross-linking reactions to occur both within the polymer and between the polymer and fiber surfaces within the fabric. Suitable blocked isocyanates with Mw below 2000 g/mol are used in the context of this invention.

Blocking agents for isocyanates are known per se and include organic compounds with at least one active hydrogen; they may be selected by the skilled person. Advantageously, the blocking agent is selected from compounds such as alcohols, lactams, phenols, oximes and pyrazoles. The blocking agent may also be chosen from a plant based phenolic compound to provide a system with an increased biocarbon content and a higher degree of sustainability. Blocking agents of this type include Cardanol (3-pentadeca-dienyl-phenol) which may be derived from cashew nutshell liquid.

Advantageously, the isocyanate is selected from the class of aliphatic isocyanates including hexamethylene diisocyanate, isophorone diisocyanate, trimethylhexamthylene diisocyanate, hydrogenated diphenyl methane diisocyanate.

Commercial examples of suitable blocked isocyanates include: Blocked isocyanate TTL (available from Beyond Surface Technologies AG), Baygard EDW and Baygard FBI (available from Tanatex). The blocked isocyantes are usually insoluble in water and are usually supplied as dispersions in water.

**Further Components:** As known in the field, further functional components may be included, such as pH adjusting agents (e.g. acid or buffer), emulsifiers (e.g .non-ionic emulsifier), biocides, softeners or wetting agents. These components are commercial items and may be selected in compliance with the specific application and included in amount conventional in the field. In an advantageous embodiment, wetting agent is included or used during impregnation. In a further advantageous embodiment, one or more emulsifiers and one or more wetting agents and one or more pH adjusting agents are included or used during impregnation

**Concentration:** The finishing bath contains the above components (wax + blocked isocyanate + optional further components) in comparatively low amounts, typically 5 wt% or less. The finishing bath is typically obtained by diluting the concentrate described below (2^{nd} aspect) with a dilution factor of 3 - 60.

In a **second aspect,** the present invention relates to concentrate dispersions comprising Candelilla wax and blocked isocyanates as further specified herein and a kit of parts comprising Candelilla wax and blocked isocyanates as further specified herein. These concentrate dispersions and kit of parts are suited to prepare the impregnating dispersions described herein and prove to be valuable commercial items, ready for use in textile industry. This aspect of the invention shall be explained in further detail below.

In one embodiment the invention provides for a concentrate dispersion comprising Candelilla wax, blocked isocyanates and further components (additives), all of which are as described in the 1^{st} aspect of the invention (forming a dispersed phase), the remaining part being water (forming a continuous phase) in an amount of 450 - 990 mL/L. Thus, the concentrates as described herein distinguish from the impregnating dispersions essentially in the water content. While the concentrates have a low water content, making them more efficient for transportation and storage, the impregnating dispersions are adapted to the machinery used in textile industry. Typically, concentration is chosen as high as possible for efficiency reasons, but at the same time to ensure stability and dispersibility.

In one embodiment, the concentration of candelilla wax in the concentrate dispersion is in the range of 1 - 55% (w/w). In a preferred embodiment, the concentration of candelilla wax in the concentrate dispersion is in the range of 10 - 40% (w/w). In an exemplary embodiment, the concentration of candelilla wax in the concentrate dispersion is 30%.

In one embodiment, the amount of water in the concentrate dispersion is in the range of 450-990 mL/L, preferably 600-900 mL/L. In an exemplary embodiment, the amount of water in said concentrate dispersion is 700 mL/L.

In one further embodiment the invention provides for a kit of parts comprising a first and a second container (first and second drum).

Said first container comprising a 1^{st} composition, said 1^{st} composition comprising a Candelilla wax as defined herein, water, optionally pH adjusting agents, biocides, wetting agents and emulsifiers as defined herein. Concentrations of candelilla wax in said first container are typically in the same range as discussed above.

Said second container comprising a 2^{nd} composition, the 2^{nd} composition comprising a blocked isocyanate as defined herein, preferably in the form of an aqueous dispersion.

Rather than providing one single concentrate, a kit of parts comprising two concentrates may be provided. Separating the wax from the blocked isocyanate may be beneficial in the textile industry, as shelf life is increased and a higher degree of flexibility is provided. Typically, the kit of parts is combined with water in appropriate amounts to obtain an impregnating dispersion

In a preferred embodiment, the kit of part comprises in a first container Candelilla wax dispersion and in a second container a blocked aliphatic isocyanate using a petrochemical-based blocked isocyanate. It is believed this embodiment provides for product of ultimate performance.

In an alternate, also preferred embodiment, the kit of part comprises in a first container Candelilla wax and in a second container a blocked aliphatic isocyante in which the isocyanate and / or the blocking agent are both bio-based. It is believed this embodiment provides for a particularly environmentally friendly product.

In an alternate, also preferred embodiment, the kit of part comprises in a first container Candelilla wax mixed with a NF-DWR polymer and in a second container a blocked aliphatic isocyante using a petrochemical-based blocked isocyanate. It is believed this embodiment provides for a product balancing costs and performance is a best way.

In an alternate, also preferred embodiment, the kit of part comprises in a first container Candelilla wax dispersion and in a second container a carefully chosen blocked aliphatic isocyanate. It is believed this embodiment provides for a product particularly suited to treat natural fibrous supports, such as, but not exclusively wool and cotton.

In an alternate, also preferred embodiment, the kit of part comprises in a first container Candelilla wax dispersion and in a second container a carefully chosen blocked aliphatic isocyanate. It is believed this embodiment provides for a product particularly suited to treat synthetic fibrous supports, such as polyesters and polyamides.

The invention also pertains to corresponding uses as outlined below: In embodiments, the invention relates to the use of a dispersions and kit of parts as defined herein, for impregnating / treating fibrous substrates, including fabrics or textile products as disclosed herein. In embodiments, the invention relates to the use of Candelilla wax in combination with a blocked isocyanate as described herein as an impregnating material.

In embodiments, the invention relates to the use of Candelilla wax in combination with a blocked isocyanate as described herein and in combination with a wetting agent or an emulsifier or a pH adjusting agent (typically an acid), as an impregnating material.

In embodiments, the invention relates to the use of Candelilla wax in combination with a blocked isocyanate as described herein and in combination with a wetting agent and an emulsifier and a pH adjusting agent (typically an acid), as an impregnating material.

In embodiments, the invention relates to the use of a kit of parts as described herein for preparing an impregnating dispersion as described herein.

In a **third aspect,** the present invention relates to textile products having a durable water repellent properties. These valuable properties are obtained, as the textile surface contains Candelilla wax and blocked isocyanates as described herein. This aspect of the invention shall be explained in further detail below.

As already discussed, the impregnating dispersions disclosed herein (1^{st} aspect, treatment liquor) are suitable for use in textile industry. A large variety of fibrous substrates may be treated. Such substrates include fibers, yarns, fabrics (woven, non-woven and knitted) and finished products (such as clothing, e.g. jeans, sportswear), collectively products of textile industry or textile products.

Accordingly, the invention provides for a textile product, comprising a fibrous support material and a coating, wherein the coating comprises candelilla wax and blocked isocyanate as defined in the 1^{st} aspect of the invention. Depending on the blocked isocyanate and the manufacturing, also reaction prcducts of blocked isocyanate and candelilla wax may be present. The coating may be present as a layer on the fibrous support. The amount of Candelilla wax on said textile product may vary over a broad range. Typically, 0.5 - 8 wt% Candelilla wax on said textile product result in suitable dwr properties. Preferably, 1 - 5 wt% Candelilla wax are present on said textile product to thereby obtain beneficial DWR properties.

In embodiments, the support material (base material) is selected from cellulose-based materials (e.g. cotton, viscose), wool, polyesters and polyamides and yarn or fibre blends of these materials.

In embodiments, the textile product is a finished product. Advantageously, such textile product is selected from sportswear garments and outdoor garments and outdoor equipment and protective clothing.

In embodiments, the textile product is a fabric selected from knits, non-woven fabrics and woven fabrics.

In embodiments, the textile product is a spun yarn or filament. Such products may be present in the form of a hank or a package or a continuous web.

In a **fourth aspect,** the present invention relates to methods for manufacturing impregnating dispersions, concentrate dispersions, and kit of parts as described herein, particularly 1^{st} and 2^{nd} aspect of the invention. Such manufacturing methods rely on process steps known per se, but not yet applied to the specific starting materials and components described herein. This aspect of the invention shall be explained in further detail below.

In one embodiment, the invention provides for a method to manufacture an impregnating dispersion as described herein, the method comprising, either (i) combining a concentrate dispersion as described herein with water or an aqueous composition or (ii) combining a 1^{st} and 2^{nd} composition of a kit of parts as described herein with water or an aqueous composition. In essence, the impregnating dispersion is obtained by dilution of a suitable starting material with water as it is conventional in the field. The sequence of adding the components may be determined by a person skilled in the art. Often, the water is provided first, and concentrate or 1^{st} and 2^{nd} composition are subsequently added while stirring the whole mixture. Temperature may be controlled, but typically room temperature is sufficient.

In one embodiment, the invention provides for a method to manufacture a concentrate dispersion as described herein, the method comprising, (i) providing a 1^{st} composition and a 2^{nd} composition as described herein; (ii) combining said 1^{st} and 2^{nd} dispersion, optionally by controlling temperature between 3 and 70 °C to thereby obtain a liquid a concentrate; and optionally (iii) diluting the thus obtained concentrate with water or an aqueous solution comprising additives as described herein to thereby obtain said concentrate dispersion.

In one embodiment, the invention provides for a method to manufacture a Candelilla wax dispersion ("1^{st} composition") as described herein. Candelilla wax is solid at room temperature, but as detailed below, aqueous dispersions are formed by high shear mixing Candelilla wax in water heated to a temperature above the melting point of the candelilla wax and containing emulsifying agents to form a dispersion and then flash chilling (quenching) the mixture. Those familiar with the art will be aware that other techniques can be used to produce wax dispersions which will give equivalent results. Accordingly, one method for obtaining the 1^{st} compcsition comprises the steps of (i) dissolving emulsifier(s) in water and heating the aqueous composition to 70 - 90 °C; (ii) adding candelilla wax, approx. 10 wt%; (iv) emulsifying the thus obtained composition, e.g. by applying high sheer forces; (v) quenching the thus obtained emulsion to thereby obtain the 1^{st} composition as disclosed herein.

In a **fifth aspect,** the present invention relates to methods for manufacturing textile products having a durable water repellent effect, particularly to the textile products described in the 3^{rd} aspect of this invention. It is considered particularly beneficial that such manufacturing methods rely on process steps known per se and machinery already used in industry. However, such method steps have not yet been applied to the specific starting materials described herein, particularly 1^{st} and 2^{nd} aspect above. This aspect of the invention shall be explained in further detail below.

The impregnating dispersion may be applied on all levels of textile industry, ie. substrates selected from (i) yarns or fibers or filaments; (ii) knitted, woven or non-woven fabrics; (iii) finished products.

In one embodiment, the invention provides for a method for manufacturing a fabric, the method comprising the steps of (a) providing knitted, woven or non-woven fabric to be coated; followed by (b)coating or padding using the impregnating dispersion described in the first aspect of the invention; followed by (c) drying and curing; and optionally followed by (d) further finishing steps as conventional in the field to thereby obtain a coated fabric. These method steps are known per se, but not yet applied in the context of an impregnating dispersion as described herein (i.e. comprising Candelilla wax and one of the specific blocked isocyanates). Suitably, the manufacturing is continuous process.

**Step (a):** The material to be coated is, in its broadest sense, a fibrous substrate. In embodiments, such substrate contains an initial coating. In alternate embodiments, such substrate is free of a coating. It is considered beneficial that the inventive coating dispersion may be applied to both, coated and non-coated substrates. The term fibrous substrate includes filaments, fibers, yarns, non-woven fabrics, and woven fabrics.

**Step (b):** This step process steps already applied in textile industry, such as coating and padding. In an exemplary setting, a dispersion concentrate as described in the 2^{nd} aspect contains 20 % (w/w) Candelilla wax. This concentrate is diluted to obtain the impregnating dispersion ("treatment liquor") containing 150 g/L of said concentrate. This treatment liquor is applied to the material of step (a) using a pick - up of 70% (w/w).

**Step (c):** This step preferably includes squeezing to remove excess dispersion from the substrate. In an exemplary setting, an amount of Candelilla wax is 2.1% owf obtained.

**Step (d):** This drying step is preferably performed at increased temperatures, e.g. least 120° for at least 30 sec.to remove excess water from the substrate, leaving a thin coating of the concentrate on the substrate.

In one embodiment, the invention provides for a method of manufacturing a textile product, preferably by garment dip process, the process comprises (a) providing a textile product to be treated; followed by (b) dipping, spraying or washing the product by using the impregnating dispersion described herein, 1^{st} aspect of the invention; followed by (c) drying and curing; and optionally followed by (d) further finishing steps; to thereby obtain a treated textile product.

**Step (a):** The product to be treated is, in its broadest sense, a textile product, such as a piece of clothing, e.g. a pair of jeans. A product to be treated includes a product to be finished or to be coated. The product supplied to step (a) may already contain an initial coating.

**Step (b):** This process step uses treatment steps already applied in the textile industry, such as dipping or washing. In an exemplary setting, a dispersion concentrate as described in the 2^{nd} aspect contains 20 % (w/w) Candelilla wax. This concentrate is diluted to obtain the impregnating dispersion ("treatment liquor") containing 150 g/L of said concentrate. This treatment liquor is applied to the textile product of step (a) to obtain a pick - up of 70% (w/w).

**Step (c)** is performed as discussed above. In an exemplary setting, an amount of candelilla wax is 2.1% owf on said textile product obtained.

To further illustrate the invention, the following **examples** are provided. A simple procedure has been devised for producing aqueous dispersions of natural waxes in the laboratory, and this is detailed as follows:

### Laboratory Preparation of Concentrate Dispersion:

5 g/l SPAN 20 and 5 g/l TWEEN 20 were heated in a glass beaker using a magnetic stirrer with heating plate, to approximately 10°C above the melting point of the wax.

100 g/l of the wax were added and stirring was continued at about 250 rpm until the wax was completely melted.

The resulting composition was emulsified with Ultraturrax (T25 disperser tool) at 11'000 rpm for 1 minute, while heating continued. As a quenching step, the thus obtained emulsion was poured in a precooled glass bottle (refrigerator) and cooled down in ice-bath or refrigerator.

The blocked isocyanate used (Extender TTL) was added to the dispersion after the quenching step referred to above. The aqueous dispersion of the blocked isocyanate was added slowly to the wax dispersion using the Ultraturrax (T25 disperser tool).

### Preparation of impregnating dispersion:

The above concentrate was diluted with cold water to form a padding or treatment liquor.

### Textile treatments

A wide range of fabrics was investigated, some of which are summarised in the following table:

| | | |
|---|---|---|
| Fabric A | Woven | 100% Cotton |
| Fabric B | Woven | 94% Polyamide; 6% Elastan |
| Fabric C | Knit | 100% Cotton |
| Fabric D | Knit | 100% PES |

The treatments of fabrics described in this invention were made using a Mathis Laboratory Padding Mangle (Type-Nr. HF1669) and a Mathis Laboratory stenter (Type-Nr. DH 45888). Individual fabric samples measuring approximately 400mm x 300mm were prepared, saturated with the treatment solution before passing through the padding mangle, to remove excess impregnating dispersion, and then drying in the stenter.

The samples were dried for 1 minute at 100°C (fabric surface temperature) and then cured for 1 minute at 160°C (fabric surface temperature) to activate the blocked isocyanate and produce cross-linking.

The samples were weighed dry before treatment and then after padding, in order to be able to calculate the pick-up and treatment level.

### Performance Testing

The DWR performance of the treatments was measured using the AATCC Test Method 22-2017e. The durability of the treatment was measured by wash-testing the samples in a front-loading washing machine, Siemens IQ300 according to Test Method EN ISO 6330 (5A) in which a 2Kg load is washed using a 5A (40°C) wash cycle.

### EXAMPLE 1 inventive (Padding Candelilla wax plus TTL)

| **Test Serie No** | **no.** | **3.3 inventive** | **3.8 comparative** | **3.11 comparative** |
|---|---|---|---|---|
| **Product name / Experiment** | | | | |
| EMUL 3297-3 (Candelilla 2) | % | 10 | 10 | 0 |
| Extender TTL 2.0 | % | 3 | 0 | 3 |
| Acetic acid 10% | g/l | 10 | 10 | 10 |

| **Fabric A; Results** | | | | |
|---|---|---|---|---|
| **Spray_AATCC 22; EN ISO 6330 (5A)** | | | | |
| **Test Serie No** | No. | **3.3** | **3.8** | **3.11** |
| initial | | **95** | 65 | 0 |
| x10 washes | | 80 | 0 | 0 |
| x 20 washes | | 70 | 0 | 0 |

| **Fabric B; Results** | | | | |
|---|---|---|---|---|
| **Spray_AATCC 22; EN ISO 6330 (5A)** | | | | |
| **Test Serie No** | No. | **3.3** | **3.8** | **3.11** |
| initial | | **100** | 70 | 0 |
| x10 washes | | **95** | 70 | 0 |
| x 20 washes | | **90** | 70 | 0 |

| **Fabric C; Results** | | | | |
|---|---|---|---|---|
| **Spray_AATCC 22; EN ISO 6330 (5A)** | | | | |
| **Test Serie No** | No. | **3.3** | **3.8** | **3.11** |
| initial | | **100** | 70 | 0 |
| x10 washes | | 80 | 50 | 0 |
| x 20 washes | | 80 | 0 | 0 |

| **Fabric D_; Results** | | | | |
|---|---|---|---|---|
| **Spray_AATCC 22; EN ISO 6330 (5A)** | | | | |
| **Test Serie No** | No. | **3.3** | **3.8** | **3.11** |
| initial | | **100** | **90** | 0 |
| x10 washes | | **100** | 80 | 0 |
| x 20 washes | | **90** | 50 | 0 |

Presence of Extender TTL significantly improves properties without providing any performance by itself (3.3 vs. 3.8 and 3.11). Candelilla wax dispersion on its own does not provide any market relevant repellent performance. By combining both products a synergistic effect in performance and durability has been determined.

### EXAMPLE 2, inventive (Padding Candelilla wax plus bio based blocked isocyanate, based on natural material)

| **Test Serie No** | **no.** | **3.1 inventive** | **3.2 inventive** | **3.8 comp.** | **3.9 comp.** | **3.10 comp.** |
|---|---|---|---|---|---|---|
| **Product name / Experiment** | | | | | | |
| EMUL 3297-3 (Candelilla 2) | % | 10 | 10 | 10 | 0 | 0 |
| Bio based blocked isocyanate | % | 3 | 5 | 0 | 3 | 5 |
| Acetic acid 10% | g/l | 10 | 10 | 10 | 10 | 10 |

| **Fabric A; Results** | | | | | | |
|---|---|---|---|---|---|---|
| **Spray_AATCC 22; EN ISO 6330 (5A)** | | | | | | |
| **Test Serie No** | No. | **3.1** | **3.2** | **3.8** | **3.9** | **3.10** |
| **Product name / Experiment** | | | | | | |
| initial | | **100** | **100** | 65 | 0 | 0 |
| x10 washes | | 80 | 80 | 0 | 0 | 0 |
| x 20 washes | | 70 | 80 | 0 | 0 | 0 |

| **Fabric B; Results** | | | | | | |
|---|---|---|---|---|---|---|
| **Spray_AATCC 22; EN ISO 6330 (5A)** | | | | | | |
| **Test Serie No** | No. | **3.1** | **3.2** | **3.8** | **3.9** | **3.10** |
| **Product name / Experiment** | | | | | | |
| initial | | **90** | **100** | 70 | 0 | 0 |
| x10 washes | | **95** | **95** | 70 | 0 | 0 |
| x 20 washes | | **90** | **90** | 70 | 0 | 0 |

Presence of a bio based blocked isocyanate significantly improves properties without providing any performance by itself (3.1 / 3.2 vs. 3.8). Superior properties are found on cellulosic/cotton when comparing ex 3.3 (inventive) to 3.2 in example 1

### EXAMPLE 3, for comparison (Padding Carnauba wax plus bio based blocked isocyanate)

| Test Serie No | no | 3.1 | 3.2 | 3.3 | 3.6 |
|---|---|---|---|---|---|
| **Product name** / **Experiment** | | | | | |
| EMUL 3297-3 (Candelilla 2) | % | 10 | 10 | | |
| EMUL 3297-4 (Carnauba) | % | | | 10 | 10 |
| Bio based Blocked isocyanate | % | 3 | 5 | 3 | 5 |
| Acetic acid 10% | g/l | 10 | 10 | 10 | 10 |

| **Fabric A; Results** | | | | | |
|---|---|---|---|---|---|
| **Spray_AATCC 22; EN ISO 6330 (5A)** | | | | | |
| **Test Serie No** | No. | **3.1** | **3.2** | **3.5** | **3.6** |
| **Product name / Experiment** | | | | | |
| initial | | **100** | **100** | 80 | 80 |
| x10 washes | | 80 | 80 | 70 | 75 |
| x 20 washes | | 70 | 80 | 50 | 50 |

| | | | | | |
|---|---|---|---|---|---|
| **Fabric B_W-2019-1105_blue; Results** | | | | | |

| **Spray_AATCC 22; EN ISO 6330 (5A)** | | | | | |
|---|---|---|---|---|---|
| **Test Serie No** | No. | **3.1** | **3.2** | **3.5** | **3.6** |
| **Product name / Experiment** | | | | | |
| initial | | **90** | **100** | 70 | 70 |
| x10 washes | | **95** | **95** | 70 | 70 |
| x 20 washes | | **90** | **90** | 70 | 70 |

This is comparative to example 2; Carnauba wax is inferior when compared to Candelilla (3.1 and 3.2 vs. 3.5 and 3.6)

### EXAMPLE 4 inventive (Padding Candelilla wax/Invadine PBN plus bio based blocked isocyanate)

| **Test Serie No** | **no.** | **3.1 inventive** | **3.2 inventive** |
|---|---|---|---|
| **Product name / Experiment** | | | |
| EMUL 3297-3 (Candelilla 2) / Invadine PBN | % | 10 | 10 |
| Bio based blocked isocyanate | % | 3 | 5 |
| Acetic acid 10% | g/l | 10 | 10 |

| **Fabric A; Results** | | | |
|---|---|---|---|
| **Spray_AATCC 22; EN ISO 6330 (5A)** | | | |
| **Test Serie No** | No. | **3.1** | **3.2** |
| **Product name / Experiment** | | | |
| initial | | **100** | **100** |
| x10 washes | | 80 | 80 |
| x 20 washes | | 70 | 80 |

| **Fabric B; Results** | | | |
|---|---|---|---|
| **Spray_AATCC 22; EN ISO 6330 (5A)** | | | |
| **Test Serie No** | No. | **3.1** | **3.2** |
| **Product name / Experiment** | | | |
| initial | | **90** | **100** |
| x10 washes | | **95** | **95** |
| x 20 washes | | **90** | **90** |

This example complements example 2. Invadine PBN is a wetting agent, commonly used in industry to allow treatment liquids to penetrate the fabric. Surprisingly, results remain unchanged, even if a wetting agent is included.

### Example 5 (inventive)

| **Test Serie No** | **no.** | **4.10 inventive** | **4.9 comparative** |
|---|---|---|---|
| **Product name / Experiment** | | | |
| Kahlwax Product 6702_new | % | 10 | 10 |
| Bio based blocked isocyanate | % | 3 | 0 |
| Acetic acid 10% | g/l | 10 | 10 |

| **Fabric A; Results** | | | |
|---|---|---|---|
| **Spray_AATCC 22; EN ISO 6330 (5A)** | | | |

| **Test Serie No** | No. | **4.10** | **4.9** |
|---|---|---|---|
| **Product name / Experiment** | | | |
| initial | | **100** | 0 |
| x10 washes | | 50 | 0 |
| x 20 washes | | 0 | 0 |

| **Fabric B; Results** | | | |
|---|---|---|---|
| **Spray_AATCC 22; EN ISO 6330 (5A)** | | | |

| **Test Serie No** | No. | **4.10** | **4.9** |
|---|---|---|---|
| **Product name / Experiment** | | | |
| initial | | 70 | 0 |
| x10 washes | | 80 | 50 |
| x 20 washes | | 60 | 0 |

This example complements example 1, but replacing the natural Candelilla wax by using synthetic Candelilla wax. Product Kahlwax 6702 new is a synthetic equivalent of candelilla. It was found that synthetic Candelilla results are significantly inferior.

## Claims

1. An impregnating dispersion comprising a continuous phase and a dispersed phase, wherein the continuous phase is an aqueous system and the dispersed phase comprises a wax and a blocked isocyanate, **characterized in that**
• the wax is Candelilla wax;
• the blocked isocyanate is selected from the group consisting of blocked-isocyanates having a molecular weight below 2000 g/mol; and
• the amount of wax + blocked isocyanate + optional further components is 5 wt% or less.

2. The impregnating dispersion of claim 1,
wherein said candelilla wax complies with one or more of the following parameters:
• a melting point of 68.5 - 72.5°C,
• an acid value of 12 - 22,
• a saponification value of 43 - 65; and / or wherein in said blocked isocyanate
• the blocking group is obtained by reacting an isocynate having a molecular weight below 2000 g/mol with an agent selected from alcohols, lactams, phenols, oximes and pyrazoles; preferably 3,5 dimethylpyrazole, and
• the isocyanate is selected from the group of aliphatic isocyanates.

3. The impregnating dispersion of claim 1 or 2, comprising on or more of the following components:
• ph adjusting agents, preferably an acid or a buffer; and/or
• emulsifiers, preferably non-ionic emulsifies; and / or
• biocides; and / or
• wetting agents; and / or
• softeners.

4. A concentrate dispersion comprising:
• Candelilla wax according to claim 1 or 2, and
• blocked isocyanate according to claim 1 or 2, and optionally
• one or more additives selected from the group consisting of ph adjusting agents, emulsifiers, biocides, softeners and wetting agents; and
• the remaining part being water in an amount of 60 - 90 wt%.

5. A kit of parts comprising a first and a second container
• the first container comprising a 1^{st} composition, said 1^{st} composition comprising a wax as defined in claim 1 or 2, water, optionally ph adjusting agents and optionally emulsifiers as defined in claim 4; and
• a second container comprising a 2^{nd} composition, the 2^{nd} composition comprising a blocked isocyanate as defined in claim 1 or 2, preferably in the form of an aqueous dispersion.

6. The kit of parts according to claim 5, wherein
• a first container comprises Candelilla wax dispersion and a second container comprises a blocked aliphatic isocyanate selected from petrochemical-based blocked isocyanate; or
• a first container comprises Candelilla wax and a second container comprises a blocked aliphatic isocyante wherein the isocyanate and / or the blocking agent are bio-based, or
• a first container comprises Candelilla wax in combination with a non-fluorine durable water repellent (NF-DWR) polymer and a second container comprises a blocked aliphatic isocyante selected from petrochemical-based blocked isocyanates; or
• a first container comprises Candelilla wax dispersion and a second container comprising a blocked aliphatic isocyanate compatible with natural fibrous supports; or
• a first container comprises Candelilla wax dispersion and a second container comprises a blocked aliphatic isocyanate compatible with synthetic fibrous supports.

7. A method for manufacturing a concentrate dispersion according to claim 4, the method comprising the steps of
x.providing a 1^{st} composition as defined in claim 6 and a 2^{nd} composition as defined in claim 6;
y.combining said first and second dispersion, optionally by maintaining a temperature between 3 - 70 °C, preferably 20 - 40 °C to thereby obtain a liquid a concentrate; and optionally
z.diluting the thus obtained concentrate with water or an aqueous solution comprising additives as defined in claim 4;
to thereby obtain said concentrate dispersion.

8. A method for manufacturing an impregnating dispersion according to any of claims 1 - 3, the method comprising, either
• combining a concentrate dispersion as defined in claim 4 with water or an aqueous composition; or
• combining a 1st and 2nd composition of a kit of parts as defined in claim 5 with water or an aqueous composition.

9. A textile product, including finished products, fabrics, yarns and fibers, comprising a base material and a coating, **characterized in that** the coating comprises the wax of claim 1 or 2 and the blocked isocyanate of claim 1 or 2 and optionally reaction products thereof; preferably wherein the amount of said wax is in the range of 0.5 - 8 wt%; and / or
preferably wherein the base material is selected from the group of cellulose-based materials, wool, polyesters and polyamides and blends thereof.

10. The textile product of claim 9, which is
• a finished product, preferably selected from sportswear garment and outdoor equipment and outdoor garment, or
• a fabric selected from non-woven fabrics and woven fabrics and knitted fabrics, or
• a yarn selected from natural or synthetic fibres or synthetic filaments.

11. A method for manufacturing a fabric comprising the steps of
a.providing knitted or woven fabric to be coated; followed by
b.coating or padding the fabric using the dispersion according to any of claims 1 - 3; followed by
c.drying and curing; and optionally followed by
d.further finishing steps,
to thereby obtain a coated fabric.

12. The method of claim 11, wherein
• the fabric of step (a) may or may not contain an initial coating; and / or
• said step (c) is performed at increased temperatures, preferably least 120° at least 30 sec; and / or
• step (b) includes squeezing.

13. A method for manufacturing a textile product, preferably by a garment dip process, the process comprising the steps of:
a.providing textile product to be treated; followed by
b.dipping or washing the product by using the dispersion of claim 1; followed by
c.drying and curing; and optionally followed by
d.further finishing steps
to thereby obtain a treated textile product.

14. Use of a dispersion as defined in any of claims 1 - 3 or a kit of parts according to claim 5 or 6, for impregnating / treating fabrics or textile products.

15. Use of Candellila wax in combination with one or more blocked isocyanates having a molecular weight below 2000 g/mol and optionally in combination with one or more wetting agents, as an impregnating material.

## Patentansprüche

1. Eine Imprägnierdispersion, die eine kontinuierliche Phase und eine dispergierte Phase umfasst, wobei die kontinuierliche Phase ein wässriges System ist und die dispergierte Phase ein Wachs und ein blockiertes Isocyanat umfasst, **dadurch gekennzeichnet, dass**
• das Wachs Candelillawachs ist;
• das blockierte Isocyanat aus der Gruppe ausgewählt ist, die aus blockierten Isocyanaten mit einem Molekulargewicht unter 2000 g/mol besteht; und
• die Menge an Wachs + blockiertem Isocyanat + optionalen weiteren Komponenten 5 Gew.-% oder weniger beträgt.

2. Die Imprägnierdispersion nach Anspruch 1,
wobei das Candelillawachs einen oder mehrere der folgenden Parameter erfüllt:
• ein Schmelzpunkt von 68,5 bis 72,5 °C,
• eine Säurezahl von 12 bis 22,
• eine Verseifungszahl von 43 bis 65 und/oder
wobei in dem blockierten Isocyanat
• die Blockierungsgruppe durch Umsetzung eines Isocyanats mit einem Molekulargewicht unter 2000 g/mol mit einem Mittel erhalten wird, das aus Alkoholen, Lactamen, Phenolen, Oximen und Pyrazolen ausgewählt ist, vorzugsweise 3,5-Dimethylpyrazol, und
• das Isocyanat aus der Gruppe der aliphatischen Isocyanate ausgewählt ist.

3. Die Imprägnierdispersion nach Anspruch 1 oder 2, umfassend eine oder mehrere der folgenden Komponenten:
• pH-Einstellmittel, vorzugsweise eine Säure oder einen Puffer; und/oder
• Emulgatoren, vorzugsweise nichtionische Emulgatoren; und/oder
• Biozide; und/oder
• Netzmittel; und/oder
• Weichmacher.

4. Konzentratdispersion, umfassend:
• Candelillawachs gemäß Anspruch 1 oder 2 und
• blockiertes Isocyanat gemäß Anspruch 1 oder 2 und gegebenenfalls
• einem oder mehreren Additiven, ausgewählt aus der Gruppe bestehend aus pH-Einstellmitteln, Emulgatoren, Bioziden, Weichmachern und Netzmitteln; und
• wobei der verbleibende Teil Wasser in einer Menge von 60 bis 90 Gew.-% ist.

5. Ein Bausatz mit einem ersten und einem zweiten Behälter
• der erste Behälter eine erste Zusammensetzung enthält, wobei die erste Zusammensetzung ein Wachs gemäß Anspruch 1 oder 2, Wasser, gegebenenfalls pH-Einstellmittel und gegebenenfalls Emulgatoren gemäß Anspruch 4 enthält; und
• ein zweiter Behälter, der eine zweite Zusammensetzung enthält, wobei die zweite Zusammensetzung ein blockiertes Isocyanat gemäß Anspruch 1 oder 2, vorzugsweise in Form einer wässrigen Dispersion, enthält.

6. Das Teilekit gemäß Anspruch 5, wobei
• ein erster Behälter eine Candelillawachsdispersion umfasst und ein zweiter Behälter ein blockiertes aliphatisches Isocyanat umfasst, das aus einem petrochemisch basierten blockierten Isocyanat ausgewählt ist; oder
• ein erster Behälter Candelillawachs umfasst und ein zweiter Behälter ein blockiertes aliphatisches Isocyanat umfasst, wobei das Isocyanat und/oder das Blockierungsmittel biobasiert sind, oder
• ein erster Behälter Candelillawachs in Kombination mit einem nicht-fluorhaltigen, dauerhaften wasserabweisenden (NF-DWR) Polymer umfasst und ein zweiter Behälter ein blockiertes aliphatisches Isocyanat umfasst, das aus blockierten Isocyanaten auf petrochemischer Basis ausgewählt ist; oder
• ein erster Behälter eine Candelillawachsdispersion enthält und ein zweiter Behälter ein blockiertes aliphatisches Isocyanat enthält, das mit natürlichen Faserträgern kompatibel ist; oder
• ein erster Behälter eine Candelillawachsdispersion enthält und ein zweiter Behälter ein blockiertes aliphatisches Isocyanat enthält, das mit synthetischen Faserträgern kompatibel ist.

7. Verfahren zur Herstellung einer Konzentratdispersion gemäß Anspruch 4, wobei das Verfahren die folgenden Schritte umfasst
x.Bereitstellen einer ersten Zusammensetzung gemäß Anspruch 6 und einer zweiten Zusammensetzung gemäß Anspruch 6;
y.Kombinieren der ersten und zweiten Dispersion, optional unter Aufrechterhaltung einer Temperatur zwischen 3 und 70 °C, vorzugsweise zwischen 20 und 40 °C, um dadurch ein flüssiges Konzentrat zu erhalten; und optional
z.Verdünnen des so erhaltenen Konzentrats mit Wasser oder einer wässrigen Lösung, die Additive gemäß Anspruch 4 enthält;
um dadurch die Konzentratdispersion zu erhalten.

8. Verfahren zur Herstellung einer Imprägnierdispersion gemäß einem der Ansprüche 1 bis 3, wobei das Verfahren entweder
• Kombinieren einer Konzentratdispersion gemäß Anspruch 4 mit Wasser oder einer wässrigen Zusammensetzung; oder
• Kombinieren einer ersten und einer zweiten Zusammensetzung eines Teilesatzes gemäß Anspruch 5 mit Wasser oder einer wässrigen Zusammensetzung.

9. Ein Textilprodukt, einschließlich Fertigprodukten, Geweben, Garnen und Fasern, bestehend aus einem Grundmaterial und einer Beschichtung, **dadurch gekennzeichnet, dass** die Beschichtung das Wachs gemäß Anspruch 1 oder 2 und das blockierte Isocyanat gemäß Anspruch 1 oder 2 und optional deren Reaktionsprodukte umfasst; vorzugsweise wobei die Menge des Wachses im Bereich von 0,5 bis 8 Gew.-% liegt; und/oder
vorzugsweise wobei das Grundmaterial aus der Gruppe der Materialien auf Cellulosebasis, Wolle, Polyestern und Polyamiden und deren Mischungen ausgewählt ist.

10. Das Textilprodukt nach Anspruch 9, das
• ein Fertigprodukt ist, vorzugsweise ausgewählt aus Sportbekleidung und Outdoor-Ausrüstung und Outdoor-Bekleidung, oder
• einem Gewebe, ausgewählt aus Vliesstoffen und Webstoffen und Gewirken, oder
• einem Garn, ausgewählt aus natürlichen oder synthetischen Fasern oder synthetischen Filamenten.

11. Verfahren zur Herstellung eines Gewebes, umfassend die Schritte
a.Bereitstellen eines zu beschichtenden Gewirks oder Gewebes; gefolgt von
b.Beschichten oder Auspolstern des Gewebes unter Verwendung der Dispersion gemäß einem der Ansprüche 1 bis 3; gefolgt von
c.Trocknen und Aushärten; und gegebenenfalls gefolgt von
d.weiteren Veredelungsschritten,
um dadurch ein beschichtetes Gewebe zu erhalten.

12. Verfahren nach Anspruch 11, wobei
• das Gewebe aus Schritt (a) eine Anfangsbeschichtung enthalten kann oder nicht; und/oder
• der Schritt (c) bei erhöhten Temperaturen durchgeführt wird, vorzugsweise mindestens 120 °C für mindestens 30 Sekunden; und/oder
• Schritt (b) das Auspressen umfasst.

13. Verfahren zur Herstellung eines Textilprodukts, vorzugsweise durch ein Tauchverfahren für Kleidungsstücke, wobei das Verfahren die folgenden Schritte umfasst:
a.Bereitstellen eines zu behandelnden Textilprodukts; gefolgt von
b.Eintauchen oder Waschen des Produkts unter Verwendung der Dispersion nach Anspruch 1; gefolgt von
c.Trocknen und Aushärten; und optional gefolgt von
d.weitere Veredelungsschritte
um dadurch ein behandeltes Textilprodukt zu erhalten.

14. Verwendung einer Dispersion gemäß einem der Ansprüche 1 bis 3 oder eines Teilesatzes gemäß Anspruch 5 oder 6 zum Imprägnieren/Behandeln von Geweben oder Textilprodukten.

15. Verwendung von Candelillawachs in Kombination mit einem oder mehreren blockierten Isocyanaten mit einem Molekulargewicht unter 2000 g/mol und optional in Kombination mit einem oder mehreren Netzmitteln als Imprägniermaterial.

## Revendications

1. Dispersion d'imprégnation comprenant une phase continue et une phase dispersée, dans laquelle la phase continue est un système aqueux et la phase dispersée comprend une cire et un isocyanate bloqué, **caractérisée en ce que**
• la cire est de la cire de candelilla ;
• l'isocyanate bloqué est choisi dans le groupe constitué par les isocyanates bloqués ayant un poids moléculaire inférieur à 2000 g/mol ; et
• la quantité de cire + isocyanate bloqué + composants supplémentaires facultatifs est de 5 % en poids ou moins.

2. La dispersion d'imprégnation selon la revendication 1,
dans laquelle ladite cire de candelilla satisfait à un ou plusieurs des paramètres suivants :
• un point de fusion de 68,5 à 72,5 °C,
• un indice d'acide de 12 à 22,
• un indice de saponification de 43 à 65 ; et/ou
dans laquelle, dans ledit isocyanate bloqué
• le groupe bloquant est obtenu en faisant réagir un isocyanate ayant un poids moléculaire inférieur à 2000 g/mol avec un agent choisi parmi les alcools, les lactames, les phénols, les oximes et les pyrazoles ; de préférence le 3,5-diméthylpyrazole, et
• l'isocyanate est choisi dans le groupe des isocyanates aliphatiques.

3. La dispersion d'imprégnation selon la revendication 1 ou 2, comprenant un ou plusieurs des composants suivants :
• des agents d'ajustement du pH, de préférence un acide ou un tampon ; et/ou
• des émulsifiants, de préférence des émulsifiants non ioniques ; et/ou
• des biocides ; et/ou
• des agents mouillants ; et/ou
• des adoucissants.

4. Dispersion concentrée comprenant :
• de la cire de candelilla selon la revendication 1 ou 2, et
• de l'isocyanate bloqué selon la revendication 1 ou 2, et éventuellement
• un ou plusieurs additifs choisis dans le groupe constitué par les agents de réglage du pH, les émulsifiants, les biocides, les adoucissants et les agents mouillants ; et
• le reste étant constitué d'eau en une quantité de 60 à 90 % en poids.

5. Kit de pièces comprenant un premier et un deuxième récipient
• le premier récipient comprenant une ^{première}composition, ladite première composition comprenant une cire telle que définie dans la revendication 1 ou 2, de l'eau, éventuellement des agents d'ajustement du pH et éventuellement des émulsifiants tels que définis dans la revendication 4 ; et
• un deuxième récipient comprenant une deuxième composition, ladite deuxième composition comprenant un isocyanate bloqué tel que défini dans la revendication 1 ou 2, de préférence sous la forme d'une dispersion aqueuse.

6. Le kit de pièces selon la revendication 5, dans lequel
• un premier récipient comprend une dispersion de cire de candelilla et un deuxième récipient comprend un isocyanate aliphatique bloqué choisi parmi les isocyanates bloqués à base pétrochimique ; ou
• un premier récipient comprend de la cire de candelilla et un deuxième récipient comprend un isocyanate aliphatique bloqué dans lequel l'isocyanate et/ou l'agent bloquant sont d'origine biologique, ou
• un premier récipient comprend de la cire de candelilla en combinaison avec un polymère hydrofuge durable sans fluor (NF-DWR) et un second récipient comprend un isocyanate aliphatique bloqué choisi parmi les isocyanates bloqués à base pétrochimique ; ou
• un premier récipient comprend une dispersion de cire de candelilla et un second récipient comprend un isocyanate aliphatique bloqué compatible avec des supports fibreux naturels ; ou
• un premier récipient comprend une dispersion de cire de candelilla et un second récipient comprend un isocyanate aliphatique bloqué compatible avec des supports fibreux synthétiques.

7. Procédé de fabrication d'une dispersion concentrée selon la revendication 4, le procédé comprenant les étapes consistant à
x.fournir une première composition telle que définie dans la revendication 6 et une deuxième composition telle que définie dans la revendication 6 ;
y.combiner lesdites première et deuxième dispersions, éventuellement en maintenant une température comprise entre 3 et 70 °C, de préférence entre 20 et 40 °C, afin d'obtenir un concentré liquide ; et éventuellement
z.diluer le concentré ainsi obtenu avec de l'eau ou une solution aqueuse comprenant des additifs tels que définis dans la revendication 4 ;
pour obtenir ainsi ladite dispersion concentrée.

8. Procédé de fabrication d'une dispersion d'imprégnation selon l'une quelconque des revendications 1 à 3, le procédé comprenant, soit
• la combinaison d'une dispersion concentrée telle que définie dans la revendication 4 avec de l'eau ou une composition aqueuse ; ou
• la combinaison d'une première et d'une deuxième composition d'un kit de pièces tel que défini dans la revendication 5 avec de l'eau ou une composition aqueuse.

9. Produit textile, comprenant des produits finis, des tissus, des fils et des fibres, comprenant un matériau de base et un revêtement, **caractérisé en ce que** le revêtement comprend la cire selon la revendication 1 ou 2 et l'isocyanate bloqué selon la revendication 1 ou 2 et, éventuellement, leurs produits de réaction ;
de préférence dans lequel la quantité de ladite cire est comprise entre 0,5 et 8 % en poids ; et/ou
de préférence, dans lequel le matériau de base est choisi parmi le groupe des matériaux à base de cellulose, la laine, les polyesters et les polyamides et leurs mélanges.

10. Le produit textile selon la revendication 9, qui est
• un produit fini, de préférence choisi parmi les vêtements de sport, les équipements de plein air et les vêtements de plein air, ou
• un tissu choisi parmi les tissus non tissés, les tissus tissés et les tissus tricotés, ou
• un fil choisi parmi les fibres naturelles ou synthétiques ou les filaments synthétiques.

11. Procédé de fabrication d'un tissu comprenant les étapes consistant à
a.fournir un tissu tricoté ou tissé à enduire ; suivi de
b.enduire ou tapisser le tissu à l'aide de la dispersion selon l'une quelconque des revendications 1 à 3 ; puis
c.séchage et durcissement ; et éventuellement suivi par
d.d'autres étapes de finition,
afin d'obtenir ainsi un tissu enduit.

12. Procédé selon la revendication 11, dans lequel
• le tissu de l'étape (a) peut ou non contenir un revêtement initial ; et/ou
• ladite étape (c) est réalisée à des températures élevées, de préférence au moins 120 °C pendant au moins 30 secondes ; et/ou
• l'étape (b) comprend un pressage.

13. Procédé de fabrication d'un produit textile, de préférence par un procédé d'immersion de vêtement, le procédé comprenant les étapes suivantes :
a.fournir le produit textile à traiter ; puis
b.trempage ou lavage du produit à l'aide de la dispersion selon la revendication 1 ; suivi
c.séchage et durcissement ; et éventuellement suivi par
d.d'autres étapes de finition.
afin d'obtenir ainsi un produit textile traité.

14. Utilisation d'une dispersion telle que définie dans l'une quelconque des revendications 1 à 3 ou d'un kit de pièces selon la revendication 5 ou 6, pour imprégner/traiter des tissus ou des produits textiles.

15. Utilisation de cire de candelilla en combinaison avec un ou plusieurs isocyanates bloqués ayant un poids moléculaire inférieur à 2000 g/mol et éventuellement en combinaison avec un ou plusieurs agents mouillants, comme matériau d'imprégnation.
